# EUROPÄISCHE PATENTANMELDUNG

(11) **EP 4 120 499 A1**
(43) Veröffentlichungstag der Anmeldung: **18.01.2023**
(21) Anmeldenummer: 22182568.0
(22) Anmeldetag: 01.07.2022
(51) Int. Cl.: H02J 3/14, H04W 52/00

(54) **TECHNIKEN ZUM ENERGIEMANAGEMENT EINES KOMMUNIKATIONSNETZES**

(30) Priorität: 15.07.2021 DE 102021118330
(71) Anmelder: Deutsche Telekom AG, 53113 Bonn (DE)
(72) Erfinder: Renken, Matthias, 28357 Bremen (DE); Albrecht, Robert Manfred, 26131 Oldenburg (DE)
(74) Vertreter: Braun-Dullaeus Pannen Emmerling Patent- & Rechtsanwaltspartnerschaft mbB

(57) **Zusammenfassung**

Die Erfindung betrifft Techniken zum Steuern eines Energieverbrauchs in einem Kommunikationssystem aufweisend verschiedene Komponenten einer Infrastrukturkette, die die Funktionalität des Kommunikationssystems ermöglichen umfassend die folgenden Schritte:
• Bereitstellen von Energieverbrauchswerten für zumindest eine Komponente der Infrastrukturkette an einen Energiemanagement-Algorithmus;
• Analyse durch den Energiemanagement-Algorithmus, ob durch eine Reduzierung des Energieverbrauchs von zumindest einer der Komponente der Infrastrukturkette die Funktionalität der Infrastrukturkette weiterhin und/oder zukünftig sichergestellt ist;
• Auswahl von Komponenten der Infrastrukturkette, die ein Energiesparpotential aufweisen, wobei gleichzeitig die Funktionalität der Infrastrukturkette weiterhin und/oder zukünftig sichergestellt wird;
• Erzeugen und Senden eines Steuerbefehls an zumindest eine der ausgewählten Komponenten, wobei der Steuerbefehl die zumindest eine ausgewählte Komponente zur Adaptierung, insbesondere zur Reduzierung, ihrer Energieverbrauchswerten veranlasst.

## Beschreibung

Die Erfindung betrifft Techniken für ein verbessertes Energiemanagement zwischen Infrastrukturkomponenten eines Kommunikationsnetzes.

Moderne Kommunikationsinfrastrukturen umfassen viele verschiedenartige Komponenten, Module o. ä. mit erheblichem Energieverbrauch, wie beispielsweise Rechenzentren, Kommunikationsnetze, Endgeräte usw. Der Energiebedarf dieser gesamten Infrastruktur steigt kontinuierlich weiter an da zum einen diese Kommunikationsnetze immer weiter ausgebaut werden und zum anderen eine zunehmende Auslagerung von Diensten und Aufgaben in sogenannte Cloudumgebungen stattfindet. Dieser Energiebedarf macht mittlerweile einen erheblichen Teil der Betriebskosten aus. Ein Einsparen an elektrischer Energie ist jedoch nicht nur eine wirtschaftliche Zielvorgabe für Unternehmen, sondern liefert auch einen wichtigen Beitrag zur Reduktion von CO₂ und somit zum Schutz der Umwelt.

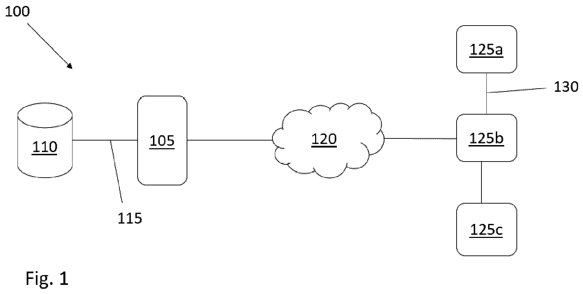

Fig. 1 illustriert die gegenwärtige Situation und zeigt ein Kommunikationsnetz 100, das verschiedene Infrastrukturkomponenten umfasst. Clouddienste können beispielsweise von Netzwerkprovidern bereitgestellt werden, wobei diese Dienste typischerweise auf einem Server 105 ablaufen, der mit einer Datenbank 110 in Verbindung steht. Den Server 105 und die Datenbank 110 kann der Netzwerkprovider mittels seines eigenen LANs 115 verbinden. Auf dem Server 105 können die entsprechenden Berechnungen der Dienste ablaufen, die den Nutzer angeboten werden. Ein Datenstrom der aus diesen Diensten resultiert wird über das Kommunikationsnetzwerk 120, insbesondere das Internet 120, an Endgeräte des Nutzers 125 weitergeleitet. Hierzu weist das Kommunikationsnetzwerk 120 typischerweise WAN Komponenten auf. Die Endgeräte des Nutzers sind beispielsweise ein PC 125a, ein Smartphone 125b und/oder ein Tablet 125c, die wiederum untereinander mit LAN und/oder WLAN Komponenten des Nutzers 130 verbunden sein können.

Fig. 1 zeigt also, dass sich hierbei gewissermaßen eine ganze Kette von Infrastrukturkomponenten ausbildet. Der Energieverbrauch dieser Kette wird aber nicht nur durch solche Komponenten verursacht, die unmittelbar für die Bereitstellung der Dienste notwendig sind, sondern auch durch Komponenten die mittelbar dazu dienen, die Funktionalität des Kommunikationsnetzes 100 aufrechtzuerhalten. Beispielsweise verbrauchen Klimaanlagen, die zum Kühlen der Rechenzentren und der entsprechenden Server 105 eingesetzt werden, eine erhebliche Menge an Energie. Auch das Bereitstellen von aktiven Kommunikationskanälen verbraucht eine erhebliche Menge an Energie.

Aus dem Stand der Technik bekannte Ansätze, den Energiebedarf einer verteilten Infrastruktur wie in Fig. 1 zu reduzieren, beschränken sich auf eine Optimierung hinsichtlich des Energiebedarfs einzelner Geräte der Kette von Infrastrukturkomponenten. Beispielsweise wird also eine Klimaanlage durch eine neue effizientere Klimaanlage ersetzt. Dies kann auch als ein statischer Ansatz zum Einsparen von Energie bezeichnet werden.

Es ist daher die Aufgabe der Erfindung Techniken anzugeben, die ein effizientes Energiemanagement in einem Kommunikationsnetz ermöglichen.

Gelöst wird diese Aufgabe mit den Merkmalen der unabhängigen Ansprüche.

Die Merkmale der im Folgenden beschriebenen verschiedenen Aspekte der Erfindung bzw. der verschiedenen Ausführungsbeispiele sind miteinander kombinierbar, sofern dies nicht explizit ausgeschlossen ist oder sich technisch zwingend ausschließt.

Erfindungsgemäß ist ein Verfahren zum Steuern eines Energieverbrauchs in einem Kommunikationssystem angegeben, wobei das Kommunikationssystem verschiedene Komponenten einer Infrastrukturkette aufweist, die eine Funktionalität des Kommunikationssystems ermöglichen umfassend die folgenden Schritte:
- Bereitstellen von Energieverbrauchswerten für zumindest eine Komponente der Infrastrukturkette an einen Energiemanagement-Algorithmus;
   ∘ die Energieverbrauchswerte können bereitgestellt werden, indem die einzelnen Komponenten der Infrastruktur eingerichtet sind ihren Energieverbrauch aktiv zu messen oder mittels eines Algorithmus zu berechnen. Insbesondere ist auch möglich, dass
   die Komponenten ihre zukünftigen Energieverbrauchswerte aus Historiedaten extrapolieren. Die Komponenten können eingerichtet sein die entsprechenden Energieverbrauchswerte in ein eigens hierfür definiertes Protokoll einzuschreiben und dieses Protokoll an den Energiemanagement-Algorithmus zusenden, dem die Energieverbrauchswerte als Input dienen. Der Energiemanagement-Algorithmus kann beispielsweise auf einem zentralen Server, insbesondere einer Energiemanagement-Steuereinheit, im Kommunikationsnetz vorgesehen sein. Die Komponenten können die Energieverbrauchswerte in einer festgelegten Frequenz oder auf eine Anforderung durch den Energiemanagement-Algorithmus senden. Insbesondere senden die Komponenten ihre Energieverbrauchswerte, wenn sich die Energieverbrauchswerte um eine vordefinierte Schwelle im Bezug zum vorherigen Senden der Energieverbrauchswerte geändert hat. Beispielsweise sendet eine Komponente erneut einen Energieverbrauchswert, wenn ihr Energieverbrauch um mehr als 10 %, insbesondere um mehr als 5 %, als die vordefinierte Schwelle zugenommen hat.
- Analyse durch den Energiemanagement-Algorithmus, ob durch eine Adaptierung, insbesondere durch eine Reduzierung, des Energieverbrauchs von zumindest einer der Komponente der Infrastrukturkette die Funktionalität der Infrastrukturkette weiterhin und/oder zukünftig sichergestellt ist;
   ∘ unter Sicherstellung der Funktionalität der Infrastrukturkette, respektive des Kommunikationssystems, wird verstanden, dass das Kommunikationssystem genug Energie zur Verfügung hat, um alle Prozesse ohne Ausfallerscheinungen zu bearbeiten. Hierfür kann dem Energiemanagement-Algorithmus auswerten, welcher Energiebedarf für eine oder mehrere der Komponenten vorhanden ist und wie hoch der tatsächlich benötigte Energiebedarf für die jeweiligen Komponenten ist. Hierbei muss diese Berechnung auf der Basis jeder einzelnen Komponente durchgeführt werden, da jede einzelne Komponente individuelle Energieanforderungen, respektive Energieprofile aufweist. Der Energiemanagement-Algorithmus kann also feststellen, dass beispielsweise die Energie einer Kühlanlage um 10 % reduziert werden kann, ohne deren Funktionalität zu beeinflussen. Hierbei ist insbesondere von Vorteil, wenn die Funktionalität anhand von einzuhaltenden QoS Werten definiert wird. Dies ermöglicht beispielsweise einem Netzwerkprovider die Funktionalität anhand von abgeschlossenen Verträgen zu definieren. Insbesondere berücksichtigt der Energiemanagement-Algorithmus gewisse Sicherheitsschwellen für die Einschätzung, ob eine Funktionalität aufrechterhalten wird oder nicht. Konkret bedeutet dies, dass der Energiemanagement-Algorithmus schon ein Versagen der Funktionalität bei einem Wert annimmt, bei dem die Infrastrukturkette noch keine Ausfallerscheinungen aufweisen sollte. Der Energiemanagement-Algorithmus kann insbesondere nicht nur ermitteln bei welchen Leistungswerten eine aktuelle Funktionalität sichergestellt wird, sondern kann dies - beispielsweise anhand von historisierten Daten - optional auch für die Zukunft prognostizieren. Dies verhindert zum einen auf vorteilhafte Weise ein beständiges Nachregulieren und stellt zum anderen sicher, dass Steuerbefehle die der Energiemanagement-Algorithmus erstellt, nicht schon dann "veraltet" sind, wenn diese im System umgesetzt werden.
   ∘ Die Analyse ist zudem so eingerichtet, dass sie die Wechselwirkungen der einzelnen Komponenten bei einer Adaptierung, insbesondere einer Reduzierung, des Energieverbrauchs berücksichtigt. Da in einer Infrastrukturkette Komponenten voneinander abhängig sind, kann es der Fall sein, dass eine Adaptierung des Energieverbrauchs der einen Komponente einen Einfluss auf die Funktionalität der anderen Komponente hat. Die Analyse kann also eingerichtet sein, insbesondere in der Form einer Simulation, die Energieverbrauchswerte einer oder mehrerer Komponenten zu variieren und den Einfluss auf die Funktionalität des Gesamtsystems auszuwerten. Beispielsweise kann eine solche Simulation mit MATLAB Simulink programmiert werden in der die einzelnen Komponenten funktional in der Infrastrukturkette modelliert sind. In der Folge werden nur solche Adaptierungen von Energieverbrauchs von Komponenten mit einem Energiesparpotenzial markiert, die die Funktionalität des Gesamtsystems weiterhin gewährleisten; wie zuvor schon angedeutet, kann bei dieser Analyse auch die Funktionalität in Form von verschiedenen Anforderungsprofil an das Gesamtsystem übergeben werden, dies bedeutet, dass sich je nach Anforderungsprofil andere Komponenten ergeben können, die mit einem Energiesparpotenzial markiert werden, wobei sich auch die entsprechenden Energieverbrauchswerte je nach Anforderungsprofil ändern können; die Analyse ermöglicht es also dynamisch die Wechselwirkungen einer komplexen Infrastrukturkette zu berücksichtigen;
- Auswahl von Komponenten der Infrastrukturkette, die ein Energiesparpotential aufweisen, wobei gleichzeitig die Funktionalität der Infrastrukturkette weiterhin und/oder zukünftig sichergestellt wird;
   ∘ die Komponenten mit einem Energiesparpotenzial sind also diese, die mit mehr Energie betrieben werden als nötig ist, um eine von ihnen erwartete Funktion respektive Leistung zur Verfügung zu stellen. Nur diese werden ausgewählt, weil die Energiezufuhr übrigen Komponenten nicht reduziert werden darf.
- Erzeugen und Senden eines Steuerbefehls an zumindest eine der ausgewählten Komponenten, wobei der Steuerbefehl die zumindest eine ausgewählte Komponente zur Adaptierung, insbesondere zur Reduzierung, ihrer Energieverbrauchswerten veranlasst.
   ∘ Der Steuerbefehl kann insbesondere durch den Energiemanagement-Algorithmus erzeugt werden. Hierzu kann ein speziell dazu eingerichtetes Protokoll erzeugt werden, das individuell die ausgewählten Komponenten adressiert. Insbesondere kann an jede einzelne Komponente ein individueller Steuerbefehl gesendet werden. Die Komponenten sind eingerichtet, den Steuerbefehl zu empfangen und entsprechend umzusetzen. Analog zur Reduzierung der Energieverbrauchswerte kann das Verfahren auch genutzt werden die Energieverbrauchswerte wieder hochzufahren, wenn der Energiemanagement-Algorithmus feststellt, dass dies zum Aufrechterhalten der Funktionalität notwendig ist. Eine weitere Option ist allerdings, dass die Komponenten selbstständig ihren Energieverbrauch wieder erhöhen, wenn diese feststellen, dass von Ihnen mehr Leistung angefordert wird, als sie derzeit liefern.
   ∘ Sicherheitsschwellen können auch beim Erzeugen der Steuerbefehle zur Aufrechterhaltung der Funktionalität berücksichtigt werden. In diesem Fall würde ein Steuerbefehl die Komponente nicht bis zu einer maximalen Reduktion ihres Energiebedarfs, der für die Funktionalität notwendig ist, anweisen, sondern nur zu einer geringeren Reduktion ihres Energiebedarfs. Beispielsweise errechnet der Energiemanagement-Algorithmus, dass der Energiebedarf eines Servers prinzipiell um 25 % reduziert werden kann, um seine Funktionalität aufrechtzuerhalten. In diesem Fall könne die Sicherheitsschwelle so gesetzt werden, dass der Steuerbefehl den Server anweist seinen Energiebedarf lediglich um 20 % zu reduzieren.

Auf vorteilhafte Weise wird hierdurch ein dynamischer Ansatz für das Energiemanagement eines Kommunikationssystems verwendet. Hierbei werden Informationen verschiedener Komponenten der Infrastrukturkette analysiert und ausgewählte Komponenten dynamisch nach dem zu erwartenden Bedarf gesteuert. Insbesondere können sich die Steuerbefehle für die einzelnen Komponenten je nach Anwendungsfall voneinander unterscheiden. Je nach Anwendungsfall kann der Energieverbrauch der einzelnen Komponenten unabhängig voneinander verschiedenartig angepasst werden.

Zweckmäßigerweise ist die Analyse eingerichtet zu bestimmen, ob eine andere Kombination an Komponenten der Infrastrukturkette, insbesondere in einer 5G Umgebung, weiterhin die Funktionalität der Infrastrukturkette, insbesondere die Funktionalität einer 5G-Slice, gewährleistet und zugleich ein Energiesparpotenzial aufweist. Konkret könnte dies bedeuten, eine Komponente oder mehrere Komponenten durch eine andere zu ersetzen und/oder eine Komponente an einem anderen geographischen Ort auszuwählen.

Das Verfahren ermöglicht es also auszuwerten, wie ein 5G Kommunikationsnetz optimiert betrieben werden kann, um möglichst viel Energie einzusparen. In einer 5G Umgebung werden Bibliotheken von Netzwerkfunktionen zusammengestellt, um verschiedene wohldefinierte Slices zu betreiben. Diese Funktionen greifen auf der Hardwareebene auf verschiedene - möglichst generische - Infrastrukturkomponenten zurück, die die Funktionen verwirklichen. Zusätzlich zu der beschriebenen Analyse, die Energieverbrauchswerte dieser Komponenten zu adaptiert, kann die Simulation auch auswerten, ob eine andere Auswahl oder Zusammenstellung der verschiedenen Komponenten der Infrastrukturkette zu einem niedrigeren Energieverbrauch führen würde, wobei die Funktionalität der Slice weiterhin gewährleistet wird. So könnte es beispielsweise sein, dass zwei verschiedene Server jeweils Teilaufgaben dieser Slice ausführen, wobei die Simulation ergeben würde, dass diese Teilaufgaben auch von einem einzigen Server ausgeführt werden können. Demzufolge könnte es zu einer Energieersparnis führen, die Netzwerkfunktionen entsprechend auszugestalten, dass nur noch der eine Server betrieben wird und der andere abgeschaltet wird.

Die vorliegende Erfindung ermöglicht also ein übergreifendes Energiemanagement innerhalb einer Kette von Infrastrukturkomponenten eines Kommunikationsnetzwerks. Ein Clou der Erfindung ist es also, dass Energiesparpotenziale ausgenutzt werden, die erst im Zusammenwirken der unterschiedlichen Komponenten der Infrastrukturkette entstehen.

Dies soll anhand eines Beispiels verdeutlicht werden: Beim Videostreaming gibt es eine intensive Nutzung von Massenspeichern und Netzwerktechnik, aber nur eine geringe Nutzung von CPU und GPU. Trotzdem werden heutzutage die CPU und GPU mit voller Leistung betrieben. Die Erfindung ermöglicht es also nun vorteilhaft, die Leistung, respektive den Energiebedarf der CPU und GPU in einem Maße zu reduzieren, dass sowohl Energie eingespart wird als auch das Videostreaming weiterhin funktioniert. Es kann von Vorteil sein, wenn alle angeschlossenen Komponenten aktuelle Energieverbrauchswerte an einen zentralen Server liefern auf dem der Energiemanagement-Algorithmus implementiert ist.

Gemäß einer vorteilhaften Ausgestaltung der Erfindung umfassen die Energieverbrauchswerte aktuell gemessene und/oder prognostizierte Energieverbrauchswerte.

Dies bietet den Vorteil, dass sowohl die aktuelle Situation als auch zukünftige Situation berücksichtigt werden können, was ein noch höheres Einsparpotenzial von Energie zur Folge hat. Energieverbrauchswerte können beispielsweise anhand von Historiedaten berechnet werden, die in einer Datenbank hinterlegt sein können, auf die der Energiemanagement-Algorithmus zugreifen kann. Diese Daten können erzeugt werden, indem der Energiemanagement-Algorithmus die ihm übermittelten Energieverbrauchswerte regelmäßig in die Datenbank einschreibt, mit einem Zeitstempel versieht und eventuell über bestimmte Zeiträume mittelt. Anhand der Historiedaten kann der Energiemanagement-Algorithmus beispielsweise prognostizieren, dass zwar aktuell wenig Energie verbraucht wird, dass aber zu erwarten ist, dass schon in den nächsten Minuten der Energiebedarf beispielsweise für das Videostreaming deutlich ansteigt. Dies könnte typischerweise ab ca. 17:00 Uhr der Fall sein, wenn der Arbeitsalltag von Nutzern vorüber ist und dieses sich Zuhause Videos anschauen.

In einer bevorzugten Ausgestaltung wird beim Erzeugen der Steuerbefehle ein Betriebszustandsprofil der jeweiligen Komponente berücksichtigt. Die Betriebszustandsprofile können dem Energiemanagement-Algorithmus beim Übersenden der Energieverbrauchswerte übermittelt werden oder aber in einer Datenbank hinterlegt sein auf die der Energiemanagement-Algorithmus zugreifen kann. Hierbei kann jede Komponente ihr eigenes Betriebszustandsprofil aufweisen, welches spezifiziert, welche Leistung die jeweilige Komponente mit einem bestimmten Energieverbrauch erbringen kann und mit welchen Energielevels die jeweilige Komponente überhaupt betrieben werden kann. Insbesondere können hierbei Mindestwerte des Energiebedarfs der jeweiligen Komponente bekannt gemacht werden.

Dies ermöglicht vorteilhaft, dass der Energiemanagement-Algorithmus die Steuerbefehle so auf die jeweilige Komponente anpassen kann, dass diese die Steuerbefehle auch wirksam umsetzen kann.

Vorzugsweise werden dem Energiemanagement-Algorithmus Prozessinformationen von zumindest einer der Komponenten bereitgestellt. Die Prozessinformationen stehen hierbei in Relation zu den Prozessen die aktuell auf den Komponenten ablaufen und/oder die zu einem späteren geplanten Zeitpunkt auf zumindest einer der Komponenten zum Ablauf geplant ist. Insbesondere kann es sich hierbei um eingesetzte Software handeln. Sowohl auf Seiten des Servers wie auch auf den Endgeräten kann verwendete Software hinsichtlich ihres Energiebedarfs kontrolliert und/oder gesteuert werden. Aus diesem Grund ist es zweckmäßig, dass die Software bestimmte Prozessinformationen an den Energiemanagement-Algorithmus sendet. Insbesondere umfassen diese Prozessinformationen auch mögliche Betriebszustände der Software. Selbst wenn die Software hinsichtlich ihres Energieverbrauchs nicht reguliert werden kann, so bieten die Prozessinformationen für den Energiemanagement-Algorithmus eine Basis, um den aktuellen oder zukünftigen Energieverbrauch der entsprechenden Komponente abzuschätzen.

Eine kaskadierte Meldung der Energieverbrauchswerte erlaubt insbesondere die Ermittlung von den Verbrauchswerten einzelner Komponenten, Verlustleistung durch die kaskadierte Energieverbrauchsinformation, Korrelationen von Energieverbrauchswerten verschiedener Verbraucher und/oder Kühlleistungsbedarf in bestimmten Bereichen.

Es gibt in der Regel verschiedene Varianten, Steuerbefehle in einer Softwareprogrammierung von Infrastrukturkomponenten umzusetzen, die Auswirkungen auf die benötigte Energie haben. So können z.B. Netzwerkverbindungen über lange Zeiträume aufrechterhalten werden, obwohl diese gar nicht gebraucht werden. Oder Desktops werden aktualisiert, obwohl gar keine Interaktion benötigt wird.

Weiterhin können Softwarekomponenten Informationen über die durch sie unterstützten Geschäftsprozesse liefern, sodass eine Auswertung des Energiebedarfs pro Geschäftsprozess möglich ist, wodurch eine intelligente Geschäftssteuerung möglich wird.

Der Energieverbrauch dieser Varianten kann über ein Hardwaremonitoring erfolgen. Da der Energiemanagement-Algorithmus als zentrale Analyseeinheit von allen Hardwarekomponenten den aktuellen Verbrauch gemeldet bekommt und durch die Meldung von den Softwarekomponenten weiß, welche Software derzeit im Einsatz ist, können Korrelationen zum Energieverbrauch der eingesetzten Software berechnet werden.

Somit liegen Charakteristika insbesondere der aktuell laufenden Software vor, z.B.: Betriebssysteme, Verteilungsgrad, Programmiersprachen und/oder unterstützte Geschäftsprozesse. Auf dieser Basis kann der Energiemanagement-Algorithmus bestimmte Komponenten der Kette hinzu- oder abzuschalten oder anderweitig konfigurieren, um den Energieverbrauch zu optimieren.

Die unmittelbaren und mittelbaren Komponenten der Diensterbringung können eine Schnittstelle besitzen, um verschiedene Energieverbrauchsmodelle einzustellen. Bei einer Klimatisierung wäre das, die Kühlleistung für bestimmte Bereiche eines Rechenzentrums getrennt steuern zu können. Netzwerkkomponenten können in der Lage sein, Ports oder Dienste einzeln zu aktivieren oder deaktivieren. Server können Teilkomponenten wie z.B. CPU, GPU, Speichermedien, Storagesysteme (SAN, NAS), Mainboards, Netzteile, etc. hinzu oder wegschalten.

In einer Erweiterung können Infrastrukturkomponenten über ein definiertes Protokoll sogenannte Energiebedarfsprotokolle an die zentrale Analyseeinheit melden. Diese Bedarfsprotokolle geben Auskunft darüber, welche energetischen Abhängigkeiten zwischen den Teilkomponenten eines Systems bestehen. Zum Beispiel könnte ein Serversystem der zentralen Auswerteeinheit melden, dass für ein reines Streaming das Netzwerk und 25% der CPU Leistung ausreichend sind, die GPU aber vollständig abgeschaltet werden kann. Für eine Konfigurationsaufgabe eines Users aber 50% CPU, 100% GPU und nur 10% Netzwerkleistung erforderlich sind. Die Energiebedarfsprotokolle werden für eine zentrale Analyse durch den Energiemanagement-Algorithmus berücksichtigt.

Bevorzugt werden die Energieverbrauchswerte von einer Vielzahl von Komponenten berücksichtigt, insbesondere von Komponenten, die verschiedenen Nutzern zugeordnet sind.

Dies bietet den Vorteil, insbesondere wenn verschiedene Nutzer berücksichtigt werden, dass hierdurch statistische Schwankungen gemittelt werden im Gegensatz zu dem Fall, wenn lediglich eine Infrastrukturkette von Komponenten eines einzelnen Nutzers berücksichtigt wird. Das Verhalten eines einzelnen Nutzers ist unter Umständen starken statistischen Schwankungen unterworfen, wobei diese Schwankungen bei einer Mehrzahl von Nutzern in der Regel deutlich geringer ausfallen. Dies ermöglicht dem Energiemanagement-Algorithmus eine zielgerichtete Prognose bezüglich der Energieverbrauchswerte eines Kommunikationssystems, das insbesondere eine Mehrzahl von Infrastrukturketten umfassen kann. Wird also eine Vielzahl von Komponenten berücksichtigt muss nicht so oft nachjustiert werden und das Kommunikationssystem kann effizienter betrieben werden.

Bevorzugt basiert der Energiemanagement-Algorithmus auf festen Regeln oder einer künstlichen Intelligenz.

Hierbei bietet ein Energiemanagement-Algorithmus der auf festen Regeln basiert den Vorteil, dass ein Netzwerkprovider genau festlegen kann, in welchem Bereich Änderungen von Parametern von statten gehen. Der Netzwerkprovider hat in diesem Sinne jederzeit vollständige Kontrolle über das System. Im Gegensatz zu einem Energiemanagement-Algorithmus, der auf festen Regeln basiert, bietet ein Energiemanagement-Algorithmus basierend auf einer künstlichen Intelligenz den Vorteil, dass die künstliche Intelligenz in der Lage ist Parameter dynamisch zu adaptieren und beispielsweise dahingehend anzupassen, ob vorherige Änderungen, verursacht durch die Steuerbefehle, einen positiven oder einen negativen Effekt auf den Energieverbrauch und/oder die Leistung des Kommunikationssystems hatten. In diesem Fall können insbesondere zukünftig solche Steuerbefehle vermieden werden, die dazu geführt haben, dass das Kommunikationssystem nicht mehr in der Lage war eine mit dem Nutzer vereinbarte Performance zu erbringen. Im Falle der Künstliche Intelligenz können an den Energiemanagement-Algorithmus Datensätze mit Energieverbrauchswerte der verschiedenen Komponenten der Infrastrukturkette übergeben werden, wobei diese Datensätze markiert werden, je nachdem. ob sie die Funktionalität der Infrastrukturkette gewährleistet können oder nicht. Auf diese Weise kann die Künstliche Intelligenz beständig trainiert werden und nach einiger Zeit zuverlässig feststellen, welche Kombination von Energieverbrauchswerten die Funktionalität der Infrastrukturkette gewährleisten kann.

In einer Ausführungsform sind die ausgewählten Komponenten keine Komponenten von privaten Nutzern. Insbesondere sind die ausgewählten Komponenten, solche Komponenten dem Netzwerkprovider zugeordnet sind.

Dies hat den Vorteil, dass ein Netzwerkprovider einfache Zugriff auf die Komponenten besitzt, die von ihm implementiert sind und administriert werden. Auch entsprechende Steuerbefehle können auf diesen Komponenten einfacher umgesetzt werden.

Gemäß einem zweiten Aspekt der Erfindung ist eine Energiemanagement-Steuereinheit angegeben, aufweisend
- eine Kommunikationsschnittstelle ausgebildet zum Empfangen von Energieverbrauchswerten und zum Senden von Steuerbefehlen;
- eine Recheneinheit auf der ein Energiemanagement-Algorithmus implementiert ist,
wobei die Energiemanagement-Steuereinheit zum Ausführen der Schritte des vorstehend beschriebenen Verfahrens ausgebildet ist.

Eine solche Energiemanagement-Steuereinheit ermöglicht die schon im Zusammenhang mit dem Verfahren beschriebenen Vorteile technisch umzusetzen. Die Energiemanagement-Steuereinheit kann beispielsweise ein zentraler Server in dem Kommunikationssystem sein und/oder als ein Modul auf diesem Server implementiert sein.

Gemäß einem dritten Aspekt der Erfindung ist eine Infrastrukturkomponente eines Kommunikationssystems der Infrastrukturkette angegeben, aufweisend
- eine Kommunikationsschnittstelle ausgebildet zum Senden von Energieverbrauchswerten und zum Empfangen von Steuerbefehlen einer Energiemanagement-Steuereinheit, wobei die Steuerbefehle gemäß dem vorstehend beschriebenen Verfahren von dem Energiemanagement-Algorithmus erzeugt wurden,
wobei die Infrastrukturkomponente eingerichtet ist, ihre Energieverbrauchswerten basierend auf den Steuerbefehlen zu adaptieren, wobei die Infrastrukturkomponente ihre Energieverbrauchswerte basierend auf den Steuerbefehlen insbesondere reduziert. Allerdings kann die Infrastrukturkomponente auch so eingerichtet sein, dass sie selbstständig ihre Energieverbrauchswerte wieder erhöht, wenn sie registriert, dass sie ansonsten nicht mehr in der Lage ist eine angeforderte Leistung bereitzustellen. Dies bietet eine effektive Möglichkeit den Energieverbrauch der Infrastrukturkomponente zu senken und verhindert zugleich optional einen Ausfall der Infrastrukturkomponente, falls der Energieverbrauch zu stark gedrosselt wird. Die Funktionalität des Kommunikationssystems wird also aufrechterhalten. Bei der Infrastrukturkomponente kann es sich beispielsweise um folgendes handeln: einen Server, Klimaanlagen, Datenleitungen, Sendeeinheiten, Empfangseinheiten, Datenbanken, Speicherverwaltung, Prozessoren und/oder Nutzerendgeräte.

Gemäß einem vierten Aspekt der Erfindung ist ein Kommunikationssystem angegeben. Das Kommunikationssystem weist auf: Verschiedene Komponenten einer Infrastrukturkette, die die Funktionalität des Kommunikationssystems ermöglichen umfassend
- die vorstehend beschriebene Energiemanagement-Steuereinheit;
- die vorstehend beschriebenen Infrastrukturkomponenten;
wobei das Kommunikationssystem zum Ausführen der Schritte des vorstehend beschriebenen Verfahrens ausgebildet ist.

Ein solches Kommunikationssystem ermöglicht die schon im Zusammenhang mit dem Verfahren beschriebenen Vorteile technisch umzusetzen.

Im Folgenden werden bevorzugte Ausführungsbeispiele der vorliegenden Erfindung unter Bezugnahme auf die begleitende Figur erläutert:
- Fig. 1:: zeigt ein Kommunikationssystem das verschiedene Infrastrukturkomponenten umfasst.
- Fig. 2:: zeigt ein erfindungsgemäßes Kommunikationssystem zur Reduzierung des Energieverbrauchs des Kommunikationssystems.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

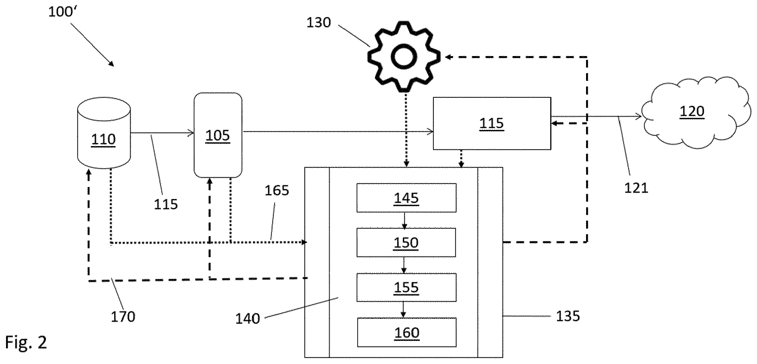

Fig. 2 das erfindungsgemäßes Kommunikationssystem eingerichtet zur Reduzierung des Energieverbrauchs des Kommunikationssystems 100'.

Das Kommunikationssystem 100' umfasst wiederum Datenbanken 110 und Server 105, die insbesondere mittels eines internen Kommunikationsnetzes 115 miteinander verbunden sind. Dieses Kommunikationsnetz 115 umfasst beispielsweise Sendeeinheiten, Empfangseinheiten, Datenleitungen usw. und stellt einen Datenstrom 121 in das Internet 120 bereit, um mit Nutzerendgeräten zu kommunizieren. Das erfindungsgemäße Kommunikationssystem 100' umfasst zudem weitere Komponenten wie beispielsweise ein Kühlsystem 130 zum Kühlen der verschiedenen Komponenten der Infrastrukturkette des Kommunikationssystems 100'. Zusätzlich ist eine zentrale Energiemanagement-Steuereinheit 135 vorgesehen auf der ein Energiemanagement-Algorithmus 140 zur Analyse und zum Steuern des Energieverbrauchs der einzelnen Komponenten implementiert ist. Die Energiemanagement-Steuereinheit 135 kann beispielsweise als ein Server ausgebildet sein.

Der Energiemanagement-Algorithmus 140 wird durch ein Flussdiagramm veranschaulicht, das die folgenden Verfahrensschritte aufweist:
Schritt 145: Bereitstellen von Energieverbrauchswerten für zumindest eine Komponente der Infrastrukturkette an einen Energiemanagement-Algorithmus;
Schritt 150: Analyse durch den Energiemanagement-Algorithmus, ob durch eine Reduzierung des Energieverbrauchs von zumindest einer der Komponente der Infrastrukturkette die Funktionalität der Infrastrukturkette weiterhin und/oder zukünftig sichergestellt ist;
Schritt 155: Auswahl von Komponenten der Infrastrukturkette, die ein Energiesparpotential aufweisen, wobei gleichzeitig die Funktionalität der Infrastrukturkette weiterhin und/oder zukünftig sichergestellt wird;
Schritt 160: Erzeugen und Senden eines Steuerbefehls an zumindest eine der ausgewählten Komponenten, wobei der Steuerbefehl die zumindest eine ausgewählte Komponente zur Adaptierung, insbesondere zur Reduzierung, ihrer Energieverbrauchswerten veranlasst.

Damit der Energiemanagement-Algorithmus 140 die notwendigen Informationen erhalten und die entsprechenden Steuerbefehle absenden kann, sind ein erster Kommunikationskanal 165, über den die verschiedenen Komponenten Energieverbrauchswerte an den Energiemanagement-Algorithmus 140 berichten, und ein zweiter Kommunikationskanal 170, über den der Energiemanagement Algorithmus 140 die entsprechenden Steuerbefehle an die einzelnen Komponenten senden kann, vorgesehen.

Nachfolgend werden konkrete Beispiele aufgeführt, die die Funktionsweise des erfindungsgemäßen Kommunikationssystems 100' illustrieren:
In der zentralen Energiemanagement-Steuereinheit 135 liegen als Informationen zu dem Betriebszustand, dem Energieverbrauch, Dienstanforderungen und/oder des Energiebedarfs über die gesamte Kette vor und können auch über die gesamte Kette gesteuert und optimiert werden. Beispiele hierfür sind:
80% der User eines Rechenzentrums nutzen einen Streamingdienst. Damit kann die Leistung für alle GPUs auf 25%, alle CPUs auf 50%, das SAN auf 50%, das Netzwerk auf 70%, die Kühlung im Bereich der Rechner auf 50% im Bereich im Netzwerkbereich auf 80%, der Hotstandby-Systeme für interaktive Oberflächen auf 10% geregelt werden.

Eine größere Geschäftsanwendung (verteilt über mehrere physikalische Rechnereinheiten) startet einen langlaufenden Jahresabschluss. Damit kann die Leistung für alle GPUs auf 0%, alle CPUs auf 100%, das SAN auf 30%, das Netzwerk auf 10%, die Kühlung im Bereich der Rechner auf 100% im Bereich im Netzwerkbereich auf 10%, Hotstandby-Systeme für interaktive Oberflächen auf 10% geregelt werden.

Durch eine Marketingaktion werden überwiegend Geschäftssysteme mit Nutzung von Grafikrendering verwendet. Damit kann die Leistung für alle GPUs auf 100%, alle CPUs auf 50%, das SAN auf 10%, das Netzwerk auf 50%, die Kühlung im Bereich der Rechner auf 100% im Bereich im Netzwerkbereich auf 50%, Hotstandby-Systeme für interaktive Oberflächen auf 50% geregelt werden.

Eine Analyse der Energienutzungsdaten je Geschäftsprozess ergibt, dass der Energieverbrauch der Anwendungen im Rechnungswesen 25% der Gesamtenergiekosten ausmachen. Hier können gezielt diese Anwendungen untersucht, modifiziert oder ggfs. ausgetauscht werden.

Wenn die verwendeten Protokolle bis in den Clientbereich verteilt werden, ist mit den gleichen Methoden eine Gesamtkettenenergiesteuerung möglich. D.h. hier ist eine WAN-weite Energieoptimierung möglich.

## Patentansprüche

1. Verfahren zum Steuern eines Energieverbrauchs in einem Kommunikationssystem aufweisend verschiedene Komponenten einer Infrastrukturkette, die die Funktionalität des Kommunikationssystems ermöglichen umfassend die folgenden Schritte:
• Bereitstellen von Energieverbrauchswerten für zumindest eine Komponente der Infrastrukturkette an einen Energiemanagement-Algorithmus;
• Analyse durch den Energiemanagement-Algorithmus, ob durch eine Reduzierung des Energieverbrauchs von zumindest einer der Komponente der Infrastrukturkette die Funktionalität der Infrastrukturkette weiterhin und/oder zukünftig sichergestellt ist;
• Auswahl von Komponenten der Infrastrukturkette, die ein Energiesparpotential aufweisen, wobei gleichzeitig die Funktionalität der Infrastrukturkette weiterhin und/oder zukünftig sichergestellt wird;
• Erzeugen und Senden eines Steuerbefehls an zumindest eine der ausgewählten Komponenten, wobei der Steuerbefehl die zumindest eine ausgewählte Komponente zur Adaptierung, insbesondere zur Reduzierung, ihrer Energieverbrauchswerten veranlasst.

2. Verfahren nach Anspruch 1, wobei die Energieverbrauchswerten aktuell gemessene und/oder prognostizierte Energieverbrauchswerte umfassen.

3. Verfahren nach einem der vorhergehenden Ansprüche, wobei beim Erzeugen von Steuerbefehlen ein Betriebszustandsprofil der jeweiligen Komponente berücksichtigt wird.

4. Verfahren nach einem der vorhergehenden Ansprüche, wobei dem Energiemanagement-Algorithmus Prozessinformationen von zumindest einer der Komponenten bereitgestellt werden.

5. Verfahren nach einem der vorhergehenden Ansprüche, wobei die Energieverbrauchswerte von einer Vielzahl von Komponenten berücksichtigt wird, insbesondere von Komponenten, die verschiedenen Nutzern zugeordnet sind.

6. Verfahren nach einem der vorhergehenden Ansprüche, wobei der Energiemanagement-Algorithmus auf festen Regeln oder einer künstlichen Intelligenz basiert.

7. Verfahren nach einem der vorhergehenden Ansprüche, wobei die ausgewählten Komponenten keine Komponenten von privaten Nutzern sind.

8. Energiemanagement-Steuereinheit aufweisend
• eine Kommunikationsschnittstelle ausgebildet zum Empfangen von Energieverbrauchswerten und zum Senden von Steuerbefehlen;
• eine Recheneinheit auf der ein Energiemanagement-Algorithmus implementiert ist,
wobei die Energiemanagement-Steuereinheit zum Ausführen der Schritte des Verfahrens nach einem der Ansprüche 1-7 ausgebildet ist.

9. Infrastrukturkomponente eines Kommunikationssystems der Infrastrukturkette aufweisend
• eine Kommunikationsschnittstelle ausgebildet zum Senden von Energieverbrauchswerten und zum Empfangen von Steuerbefehlen einer Energiemanagement-Steuereinheit,
wobei die Infrastrukturkomponente eingerichtet ist, ihre Energieverbrauchswerten basierend auf den Steuerbefehlen zu adaptieren.

10. Kommunikationssystems aufweisend verschiedene Komponenten einer Infrastrukturkette, die die Funktionalität des Kommunikationssystems ermöglichen umfassend
• eine Energiemanagement-Steuereinheit nach Anspruch 8;
• Infrastrukturkomponenten nach Anspruch 9;
wobei das Kommunikationssystem zum Ausführen der Schritte des Verfahrens nach einem der Ansprüche 1-7 ausgebildet ist.
